# EUROPÄISCHE PATENTSCHRIFT

(11) **EP 0 777 036 B1**
(45) Veröffentlichungstag und Bekanntmachung des Hinweises auf die Patenterteilung: **26.09.2001**
(21) Anmeldenummer: 96810789.6
(22) Anmeldetag: 14.11.1996
(51) Int. Cl.: F01K 23/10

(54) **Chemische Fahrweise eines Wasser/Dampf-Kreislaufes**
Chemical operation of a water-steam cycle
Conduite chimique d'un cycle eau-vapeur

(30) Priorität: 28.11.1995 DE 19544224
(43) Veröffentlichungstag der Anmeldung: 04.06.1997
(73) Patentinhaber: ASEA BROWN BOVERI AG, 5400 Baden (CH)
(72) Erfinder: Kamberger, Werner, 8472 Ober-Ohringen (CH); Liebig, Erhard, Dr., 71254 Ditzingen (DE)

(56) Entgegenhaltungen:
- DE-A- 4 126 631
- PATENT ABSTRACTS OF JAPAN vol. 014, no. 410 (M-1020), 5.September 1990 & JP 02 157503 A (HITACHI LTD), 18.Juni 1990,
- PATENT ABSTRACTS OF JAPAN vol. 017, no. 517 (M-1481), 17.September 1993 & JP 05 133501 A (HITACHI LTD), 28.Mai 1993,

## Beschreibung

### Technisches Gebiet

Die Erfindung betrifft einen Mehrdruck-Abhitzekessel mit mindestens einem Umlaufdampferzeuger, im wesentlichen bestehend aus einem Niederdruckeconomiser, einer Niederdrucktrommel und einem Niederdruckverdampfer und mindestens einem Zwangsdurchlaufdampferzeuger, im wesentlichen bestehend aus einem Hochdruckeconomiser, einem Hochdruckverdampfer und einem Hochdrucküberhitzer. Sie betrifft auch ein Verfahren zum Betrieb einer solchen Anlage.

### Stand der Technik

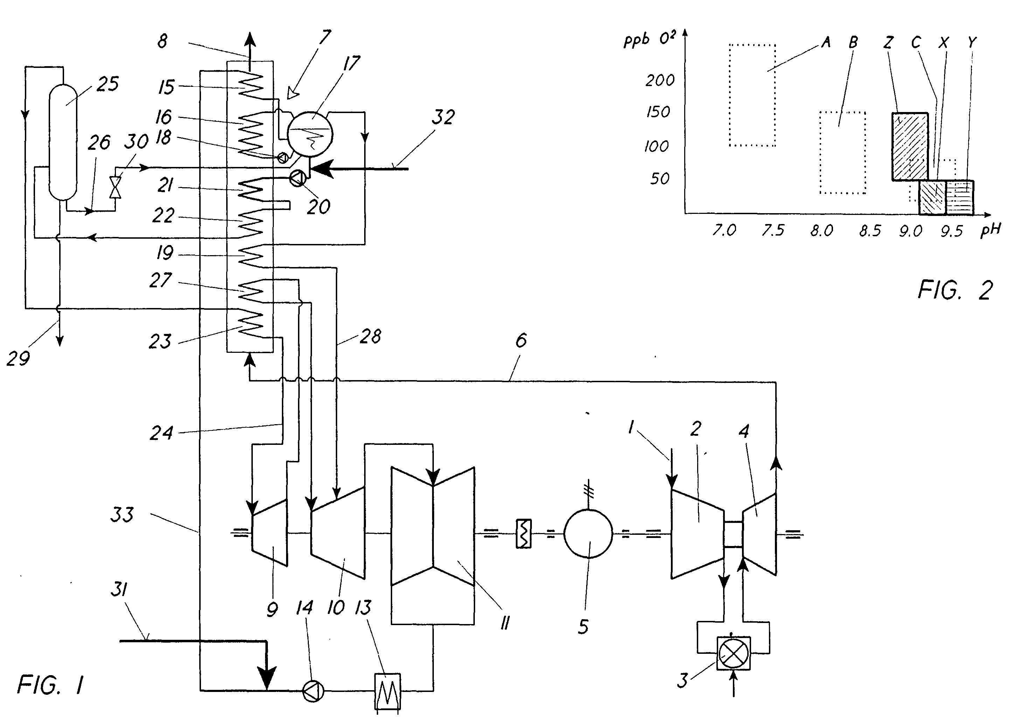

Abhitzekessel zur Nutzung der Abwärme von Heissgas produzierenden Energie- oder Prozessanlagen werden entweder als Umlaufkessel mit Trommel oder aber als Zwangsdurchlaufkessel ausgeführt. Die chemische Fahrweise entspricht den üblichen Spezifikationen für konventionelle Dampferzeugungsanlagen (z.B. TRD 611, VGB-R 450 L, EPRI-Guidelines). In der später zu beschreibenden Fig. 2 sind die Alkalische Fahrweise, die Neutrale Fahrweise und die Kombi-Fahrweise, wie sie durchwegs Anwendung finden, kurz erläutert. Probleme ergeben sich, wenn ein Abhitzekessel mit einem Umlauf-Niederdrucksystem und einem Durchlauf-Hochdrucksystem ausgerüstet ist. Gelangt beispielsweise die übliche Alkalische Fahrweise zur Anwendung, so konzentriert sich das Ammoniak aufgrund seiner unterschiedlichen Löslichkeit in Dampf und Wasser im Dampfbereich der Niederdrucktrommel auf. Innerhalb der Trommel ist im Dampf der Ammoniakgehalt dann unverhältnismässig hoch, im Wasser dementsprechend zu niedrig. Wird der Zwangsdurchlaufdampferzeuger jetzt mit Wasser aus der Niederdrucktrommel gespeist, so werden seine Austauschflächen ungenügend gegen Korrosion und Ablagerungen geschützt, da sich keine optimale Oxydschutzschicht aufbauen kann.

### Darstellung der Erfindung

Der Erfindung liegt deshalb die Aufgabe zugrunde, eine Anlage und ein Betriebsverfahren der eingangs genannten Art zu schaffen, bei welchen alle Teile der Anlage gegen Korrosion und Bildung von Ablagerungen zu schützten sind.

Erfindungsgemäss wird dies dadurch erreicht, dass zwischen der Niederdrucktrommel des Umlaufdampferzeugers und dem Hochdruckeconomiser des Zwangsdurchlaufdampferzeugers eine Sauerstoffzugabe angeordnet ist und dass in der zum Umlaufdampferzeuger führenden Kondensatleitung eine Ammoniakzugabe angeordnet ist.

Ein Verfahren zum Betrieb einer solchen Anlage zeichnet sich dadurch aus, dass in das Kondensat, welches einen pH-Wert zwischen 8,8 und 9,4 aufweist, soviel Ammoniaklösung hinzudosiert wird, dass in der Dampfphase der Niederdrucktrommel ein pH-Wert zwischen 9,4 und 9,7 erreicht wird, und dass in das zum Zwangsdurchlaufdampferzeuger strömende Wasser soviel gasförmiger Sauerstoff eingeleitet wird, dass sich dessen SauerStoffgehalt zwischen 50 und 150 ppb bewegt, bei einem pH-Wert zwischen 8.8 und 9,2.

### Kurze Beschreibung der Zeichnung

In der Zeichnung ist ein Ausführungsbeispiel der Erfindung anhand einer kombinierten Gas-Dampf-Kraftwerksanlage schematisch dargestellt. Es sind nur die für das Verständnis der Erfindung wesentlichen Elemente gezeigt. Die Strömungsrichtung der Arbeitsmittel ist mit Pfeilen dargestellt.

### Weg zur Ausführung der Erfindung

Gemäss Figur 1 wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine dreistufige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keine, in der Regel entnahmedampfbeheizten Niederdruckvorwärmer, Speisewasserbehälter und Hochdruckvorwärmer aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufssystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Zur Phasentrennung ist eine Abscheideflasche 25 vorgesehen, in welche der Austritt des Hochdruckverdampfers 22 mündet. Die Abscheideflasche ist an ihrem obereren Ende mit dem Hochdrucküberhitzer 23 verbunden. An ihrem unteren Ende ist sie zusätzlich mit einer Abschlämmleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Durch Variation der Drücke und Massenströme im Umlaufsystem und im Durchlaufsystem kann mit einem solchen Dampferzeuger ein weiter Bereich von Kombiprozessen abgedeckt werden.

Bei der im Gleitdruckverfahren arbeitenden Anlage wird ein Kessel mit einer Aufteilung der Massenströme im Niederdrucksystem und im Hochdrucksystem im Verhältnis von 1:4 bezw. 1:5 als sinnvoll angesehen.

Mit dem Erreichen der jeweiligen Siedetemperaturen beginnt im Kessel die Dampfprodukion. Der erste Dampf im Niederdrucksytem wird durch Entspannung von rezirkuliertem Hochdruck-Sattwasser aus der Abscheideflasche erzeugt.

Die Abscheideflasche sorgt dafür, dass während des Normalbetriebes der Hochdrucküberhitzer jederzeit trocken bleibt und am Kesselaustritt frühzeitig überhitzter Dampf zur Verfügung steht.

Aus der Zeichnung ist ersichtlich, dass auf eine Kondensatreinigungsanlage verzichtet wird. Dem liegt die Überlegung zugrunde, dass die Verunreinigungen im Dampf/Wasserkreislauf im Bereich der Abscheideflasche abgezogen werden können. Die Reinigung des Dampf/Wasserkreislaufes kann sowohl bei Vollast als auch bei Teillast erfolgen. Hierzu wird das Hochdrucksystem überspeist, d.h. es wird über die Hochdruckspeisepumpe eine grössere Menge Wasser als erforderlich durch den Zwangsdurchlauf-Dampferzeuger gefördert. Es versteht sich, dass die Hochdruckspeisepumpe für die Mehrmenge entsprechend grösser ausgelegt sein muss. Die geförderte Wassermenge wird so eingestellt, dass auf jeden Fall Nassdampf in die Flasche gelangt. In den Wassertröpfchen des Wasser-Dampf-Gemisches sind die Verunreinigungen gebunden. In der Flasche wird der Wasseranteil des Dampfes durch geeignete Mittel separiert und über die Abschlämmleitung 29 abgezogen. Von Vorteil bei diesem Verfahren ist, dass der Kreislauf bereits nach wenigen Durchläufen, d.h. innert kürzester Zeit, weitgehend von Verunreinigungen befreit ist.

Gemäss der Erfindung sollen nunmehr Vorkehrungen getroffen werden, um die eingangs erwähnte Korrosionsanfälligkeit bei solchen Kesseln insbesondere im Durchaufdampferzeuger zu reduzieren. Hierzu wird eine neue chemische Fahrweise mit folgenden Verfahrenschritten gewählt:

Stromabwärts des Kondensators 13 weist das Kondensat in der Regel einen Sauerstoffgehalt <50 ppb und einen pH-Wert zwischen 8,8 und 9,4 auf. In dieses Kondensat wird nun mittels einer Dosieranlage soviel Ammoniaklösung eingeleitet, dass es in der Zuleitung zum Kessel einen pH-Wert zwischen 9,1 und 9,4 aufweist. Mit diesem Wert gelangt das Wasser über den Niederdruckeconomiser 15 in die Niederdrucktrommel 17. Die unterschiedliche Löslichkeit hat zur Folge, dass sich das Ammoniak im Dampf aufkonzentriert. Beträgt der pH-Wert des Wassers beim Eintritt in die Trommel noch beispielsweise 9.25, so steigt der pH-Wert im Dampf infolge der Aufkonzentration auf ca. 9.6, während das Trommelwasser nur noch einen pH-Wert von 9.0 aufweist. Für die Belange des ND-Verdampfers reicht dieser Wert aus. Nicht jedoch für die Bildung einer ordentlichen Oxydschutzschicht auf der Zwangsdurchlauf-Berohrung, die mit dem gleichen Trommelwasser angespeist wird. Um hier nun ideale Schutzschicht-Bedingungen zu schaffen, wird in das zum Hochdruckeconomiser strömende Speisewasser soviel gasförmiger Sauerstoff 32 eingeleitet, dass sich ein Sauerstoffgehalt zwischen 50 und 150 ppb einstellt.

Die Einrichtung für dieses Verfahren ist denkbar einfach. Die Sauerstoffzugabe 32 kann volumetrisch direkt aus Sauerstoff-Druckflaschen erfolgen oder aus einem bestehenden Sauerstoff-Gasnetz, die Ammoniakzugabe in Form von verdünner Ammoniaklösung mittels Dosierpumpen.

Im Diagrammm in Fig. 2 ist die neue Fahrweise erkennbar. Auf der Abzisse ist der pH-Wert aufgetragen, auf der Ordinate der Sauerstoffgehalt in [ppb]. Die drei punktierten Bereiche stellen jeweils die eingangs erwähnten'üblichen Fahrweisen dar; nämlich A die Neutrale Fahrweise, B die Kombifahrweise und C die Alkalische Fahrweise. Die neue Fahrweise ist in den schraffierten Bereichen gezeigt. Ausgangslage ist der Bereich X, der den Sauerstoffgehalt und den pH-Wert des Kondensats nach der Ammoniakdosierung am Kesseleintritt darstellt. Den Zustand des mit Ammoniak angereicherten Niederdruckdampfes zeigt der Bereich Y, jenen des mit Sauerstoff angereicherten Hochdruck-Speisewassers zeigt der Bereich Z.

Die getrennte Zugabe von Ammoniak (31) vor der Niederdrucktrommel 17, vorzugsweise in die Speiseleitung 33 nach der Kondensatpumpe 14, und von Sauerstoff (32) nach der Niederdrucktrommel 17, vorzugsweise vor der Hochdruck-Speisepumpe 20, hat zur Folge, dass alle Anlagenteile wirkungsvoll geschützt werden. Geregelt wird die spezifizierte Wasser/Dampf-Qualität über die Dosiermenge an Konditionierungs-Chemikalien, über die Vakuumentgasung im Kondensator und die im Zusammenhang mit der Reinigung des Kreislaufs beschriebene Absalzung aus der Abscheideflasche 25.

### Bezugszeichenliste

- 1: Leitung (angesaugte Frischluft)
- 2: Verdichter
- 3: Brennkammer
- 4: Gasturbine
- 5: Generator
- 6: Abgasleitung zu 7
- 7: Abhitzedampferzeugungsanlage
- 8: Abgasleitung aus 7
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Hochdruckspeisewasserpumpe
- 21: Hochdruckeconomiser
- 22: Hochdruckverdampfer
- 23: Hochdrucküberhitzer
- 24: Frischdampfleitung
- 25: Abscheideflasche
- 26: Rezirkulationsleitung
- 27: Zwischenüberhitzer
- 28: Niederdruck-Dampfleitung
- 29: Abschlämmleitung
- 30: Absperrorgan
- 31: Ammoniakzugabe
- 32: Sauerstoffzugabe
- 33: Speiseleitung

- A: Neutrale Fahrweise
- B: Kombifahrweise
- C: Alkalische Fahrweise
- X: Ausgangszustand im Kondensat
- Y: Ammoniak angereichert im Niederdruckdampf
- Z: mit Sauerstoff angereichertes Hochdruck-Speisewasser

## Patentansprüche

1. Mehrdruck-Abhitzekessel (7) mit mindestens einem Umlaufdampferzeuger, im wesentlichen bestehend aus einem Niederdruckeconomiser (15), einer Niederdrucktrommel (17) und einem Niederdruckverdampfer (16) und mindestens einem Zwangsdurchlaufdampferzeuger, im wesentlichen bestehend aus einem Hochdruckeconomiser (21), einem Hochdruckverdampfer (22) und einem Hochdrucküberhitzer (23),
**dadurch gekennzeichnet,**
**dass** zwischen der Niederdrucktrommel (17) des Umlaufdampferzeugers und dem Hochdruckeconomiser (21) des Zwangsdurchlaufdampferzeugers eine Sauerstoffzugabe (32) angeordnet ist und dass in der zum Umlaufdampferzeuger führenden Speiseleitung (33) eine Ammoniakzugabe (31) angeordnet ist.

2. Verfahren zum Betrieb des Kessels nach Anspruch 1,
**dadurch gekennzeichnet, dass** in das Kondensat, welches einen pH-Wert zwischen 8,8 und 9,4 aufweist, soviel gelöstes Ammoniak eingeleitet wird, dass sich im Dampfraum der Niederdrucktrommel (17) ein pH-Wert zwischen 9,4 und 9,7 einstellt, und dass in das zum Zwangsdurchlaufdampferzeuger strömende Wasser soviel gasförmiger Sauerstoff eingeleitet wird, dass sich dessen Sauerstoffgehalt zwischen 50 und 150 ppb bewegt, bei einem pH-Wert zwischen 8.8 und 9,2.

## Claims

1. Multi-pressure waste-heat boiler (7) having at least one circulation steam generator, essentially comprising a low-pressure economizer (15), a low-pressure drum (17) and a low-pressure evaporator (16), and at least one once-through steam generator, essentially comprising a high-pressure economizer (21), a high-pressure evaporator (22) and a high-pressure superheater (23), **characterized in that** an oxygen addition (32) is arranged between the low-pressure drum (17) of the circulation steam generator and the high-pressure economizer (21) of the once-through steam generator, and in that an ammonia addition (31) is arranged in the feed line (33) leading to the circulation steam generator.

2. Method of operating the boiler according to Claim 1, **characterized in that** so much dissolved ammonia is introduced into the condensate, which has a pH value between 8.8 and 9.4, that a pH value between 9.4 and 9.7 becomes established in the steam space of the low-pressure drum (17), and in that so much gaseous oxygen is introduced into the water flowing to the once-through steam generator that its oxygen content ranges between 50 and 150 ppb at a pH value between 8.8 and 9.2.

## Revendications

1. Chaudière à chaleur perdue à plusieurs pressions (7), ayant au moins une unité de production de vapeur de circulation, se composant, pour l'essentiel, d'un économiseur basse pression (15), d'un tambour basse pression (17) et d'un évaporateur basse pression (16), et au moins une unité de production de vapeur à passage forcé, se composant, pour l'essentiel, d'un économiseur haute pression (21), d'un évaporateur haute pression (22) et d'un surchauffeur haute pression (23), **caractérisée en ce que** l'on dispose, entre le tambour basse pression (17) de l'unité de production de vapeur de circulation et l'économiseur haute pression (21) de l'unité de production de vapeur à passage forcé, une admission d'oxygène (32), et en ce que l'on dispose, dans le conduit d'alimentation (33) conduisant à l'unité de production de vapeur de circulation, une admission d'ammoniac (31).

2. Procédé pour le fonctionnement de la chaudière selon la revendication 1, **caractérisé en ce que** l'on introduit, dans le condensat, lequel présente une valeur de pH comprise entre 8,8 et 9,4, une quantité d'ammoniac dissous suffisante à ce qu'il s'établisse, dans l'espace de vapeur du tambour basse pression (17), une valeur de pH comprise entre 9,4 et 9,7, et en ce que l'on introduit, dans l'eau s'écoulant vers l'unité de production de vapeur à passage forcé, une quantité d'oxygène gazeux suffisante à ce que sa teneur en oxygène se situe entre 50 et 150 ppb, pour une valeur de pH comprise entre 8,8 et 9,2.
